# EUROPEAN PATENT SPECIFICATION

(11) **EP 3 704 574 B1**
(45) Date of publication and mention of the grant of the patent: **03.01.2024**
(21) Application number: 17800616.9
(22) Date of filing: 30.10.2017
(51) Int. Cl.: G06F 9/445, G06F 9/451

(54) **VEHICLE STATE BASED GRAPHICAL USER INTERFACE**
AUF FAHRZEUGSTATUS BASIERENDE GRAFISCHE BENUTZEROBERFLÄCHE
INTERFACE UTILISATEUR GRAPHIQUE BASÉE SUR L'ÉTAT D'UN VÉHICULE

(43) Date of publication of application: 09.09.2020
(73) Proprietor: Harman International Industries, Incorporated, Stamford, CT 06901 (US)
(72) Inventor: MEWAR, Rohit, Bangalore Karnataka 560066 (IN); VARGHESE, Eugine, Novi, MI 48375 (US)
(74) Representative: Rummler, Felix
(86) International application number: PCT/IB2017/056722
(87) International publication number: WO 2019/086925

(56) References cited:
- US-A1- 2011 093 136
- US-A1- 2013 159 228
- US-A1- 2013 238 190
- US-A1- 2014 106 726

## Description

### Technical Field

The present invention generally relates to user interface in a vehicle. More particularly it relates to operating the graphical user interface of a vehicle infotainment system based on the state of the vehicle.

### BACKGROUND OF THE INVENTION

Modem day vehicles are equipped with in-car entertainment (ICE), or in- vehicle infotainment (IVI) devices. These devices comprise a collection of hardware and software elements that provide audio and/or video entertainment as well as information to the occupants of the vehicle. Feature rich automotive applications in these devices most often present a complex User Interface (UI) which may require some thought to be applied by the user. This is not ideal while the vehicle is in motion as it can distract the user from driving the vehicle safely. In traditional automotive infotainment solutions the UI is implemented with a single component or a few components which are well defined when the software is shipped. The more modem infotainment systems offer applications to be installed from a market place. With cloud based back end infrastructure, real-time location based services, easy access entertainment sources and mobile connectivity infotainment system developers these days offer many independent, rich applications to vehicle users. And this presents a challenge of how to monitor and avoid or at least minimize driver distraction while he/she is driving.

US 2014/106726 A1 describes a system pertaining to the features of the preamble of the independent claims.

### SUMMARY

The present invention is defined in the independent claims. Preferred features are recited in the dependent claims.

According to an embodiment, there is provided a method and a system for operating a user interface of a vehicle infotainment device depending on the state of the vehicle. Among other things, the present disclosure is directed to an intelligent system that is capable of rendering a user interface operation version that is most appropriate given a certain state of the vehicle.

The method and the system disclosed herein ensures that the driver is able to safely drive the car without getting distracted by the user interface of the in-car entertainment device or the vehicle infotainment device, and at the same time also not having to give up enjoying the features offered by the infotainment device. The disclosed technique adapts the UI of the vehicle infotainment device such that it does not require driver's full attention for operation or in some cases even prevents a certain application/feature from being presented to the user, depending on the vehicle state. The technique enhances an application framework of the system to launch the UI presented to the user according to the current state of the vehicle and transition to an appropriate different UI configuration upon transition of the vehicle state.

In an exemplary embodiment, the vehicle location may be used as an input when deciding the UI operation version to be presented to the user. The technique aims to restrict certain applications available to the user while the vehicle is in motion for safety measures. According to another embodiment, application restriction levels such as Max, Med, Min in proportion to vehicle speed may be configured. Similarly, according to an embodiment, UI simplicity or complexity may be configured and adjusted depending on vehicle state. For example, at higher vehicle speed a simplified UI version may be displayed to the user that requires minimum attention or involvement from the driver. Alternatively, during high speed, the system may be operated to require as few inputs from the user as possible to operate. The technique disclosed herein further is further extended to give the system the capability to decide what inputs to prompt for on its own without user intervention while the vehicle is in motion by tracking and caching decisions taken by the same user in the past.

The method disclosed herein provides for operating a user interface of a vehicle infotainment device, the user interface being operable to present one or more applications and/or one or more versions of the same application. The method comprises retrieving vehicle state input data, processing the vehicle state input data to select one of a plurality of different user interface operation versions based on the vehicle state input data, and operating the user interface according to the selected user interface operation version.

Each of the plurality of different user interface operation versions comprises a respective set of operations based on a past event training log and/or a respective set of different applications. The advantage arising out of this feature is that the system takes in vehicle state related relevant inputs to provide the user with an intelligent user interface which dynamically acts to ensure a safe driving experience to the user.

An embodiment of the method comprises of a framework which can render the same application into various versions by simplifying or skipping one or many subcomponents of the application during rendering. In one embodiment the method comprises at least one application for operation in each of the different user interface versions, wherein the application is operable in different application versions, wherein each of the application versions is associated with a respective one of the different user interface operation versions. In one of many embodiments the application version comprises one of a light version, a medium version and a high version of the same application. The light version comprises basic user interface-UI complexity, the medium version comprises medium UI complexity and the high version comprises full- fledged UI complexity. The advantage of having different application versions of same application with different levels of user interface complexity or different levels of feature functionality is that it provides the driver an application version that is most suitable for the current driving condition without distracting him/her from the task of driving. For example, at high speed the method offers scope to the user to continue using an application albeit with an easier user interface that needs fewer driver inputs or interaction to function smoothly.

According to an embodiment the application comprises a plurality of functions, wherein a reduced set of the plurality of functions is available for operation in at least one the application versions. Advantageously, a simple version of the application may have fewer features and functionality as compared to the medium or the higher version, therefore also lesser avenues for driver's distraction.

In an alternate embodiment the user requests to launch an application and the method allows or denies the launch request depending on the vehicle state input information. For example, a driver/user has requested to launch a Video Player application, on fetching the vehicle state input data or information the processing module observes that the current speed of the vehicle is above a maximum safety limit, for example 100 km/hr. Since a Video Player application could distract the driver as it plays a video, the processing module is operable to restrict this application from being launched (due to speed of the vehicle) and the system is operable to notify the user about the same by a toast message on display along with the reason.

Similarly, if the vehicle is moving slowly due to traffic conditions and the vehicle speed is less than 20km/hr, for example, or the vehicle is not in motion at all, the processing module could allow launching of the Video Player application, as it would not be a threat to the safety of the driver.

According to another embodiment each version of the application is associated with a respective version of representation of the application and/or functions thereof to a user via the user interface. For example, with this embodiment it is possible to reduce the number and/or adapt the size of displayed icons dependent on the detected conditions such as speed.

According to another embodiment the applications comprise one or more of network and connectivity application, communication application, navigation application, video player application, messaging application, multimedia application or social media application. Many other applications may also be available in the infotainment device and the disclosed method is not limited to only the listed applications.

In yet another embodiment operating different versions of the user interface associated with different applications comprises rendering all or a subset of applications to the user interface based on the vehicle state input data. This prevents the home screen of the infotainment device from crowding and makes it easier for the driver to navigate to the applications that he needs urgently. According to another embodiment the system displays only those applications that are deemed safe for use during driving hiding the other applications which may require more attention from the driver.

According to another embodiment the method further comprises monitoring the vehicle state input data for a change, processing the changed vehicle state input data to select a user interface operation version based on the changed vehicle state input data, and operating the user interface by transitioning to the selected user interface operation version. This makes the method dynamic and updated to the latest vehicle state conditions.

In an embodiment the vehicle state input data comprises at least one of speed of vehicle, acceleration of vehicle, deceleration of vehicle, inside temperature of vehicle, engine temperature, GPS location of the vehicle, fuel level information, terrain traversed by the vehicle, driving condition, road condition, vehicle occupant and/or driver information, engine control unit-ECU output or sensor information. The method may also include other such similar vehicle state inputs which may have not been explicitly disclosed here.

The past event training log comprises a log of a user's interaction with the user interface of the vehicle infotainment device corresponding to one or more events. This will reduce the driver's involvement with the infotainment device thereby making his/her driving distraction free and safer. The past event training log may be stored on a memory unit within the vehicle infotainment device. An event comprises at least one of an incoming call, incoming message, information alert, or any other event requiring an input or a response from the driver. The system comprises a processing module to receive vehicle state input data and process the vehicle state input data to select a user interface operation version based on the vehicle state input data and a user interface operation module to operate the user interface according to the selected user interface operation version.

According to another embodiment the user interface comprises a display for displaying one or more applications and/or different application versions of the same application corresponding to the user interface operation version.

In yet another embodiment the processing module is operable to receive the vehicle state input data from one or more sensors, wherein the sensors are integrated in the vehicle and/or the sensors are external to the vehicle. Sensors would capture the most recent state of the vehicle and also keep monitoring for any change in the state.

In a further embodiment the processing module is operable to access a database comprising rules to select a user interface operation version corresponding to a vehicle state input data value. These rules are pre-established for every given vehicle state input data so the system is aware how to react to a certain vehicle state input data. Each such rule may be tried and tested before to ensure maximum safety of the driver. In another embodiment the processing module maintains a data structure having fields that correspond to each vehicle state input data.

In accordance with another aspect of the invention, there is provided a computer-program product having a non-transitory computer readable medium storing computer executable code which, when executed by computer, causes the above method to be performed.

### BRIEF DESCRIPTION OF THE DRAWINGS

The present invention may be better understood from reading the following description of non-limiting embodiments, with reference to the attached drawings, wherein:
FIG. 1 schematically shows an example system in accordance with one of a number of embodiments;
FIG. 2 schematically shows yet another example system in accordance with one of a number of embodiments;
FIG. 3 schematically shows an exemplary infotainment device of a car in accordance with one of a number of embodiments;
FIG. 4A-4C schematically show different versions of the use interface in accordance with one of a number of embodiments; FIG. 5A-5C schematically show different versions of an application available to the user interface in accordance with one of a number of embodiments; and
FIG. 6 is a flow chart for an example method in accordance with one of a number of embodiments.

### DETAILED DESCRIPTION OF THE PREFERRED EMBODIMENTS

In modern day cars, when a user launches an application on an in-car-entertainment (ICE) system or a vehicle infotainment device of the car, from HMI (Human Machine Interface) or display, the system launches that application and the application gets displayed on display screen or HMI. The rendered application is in its original format and its corresponding user interface is not affected by the driving circumstances.

This disclosure presents a system, which takes decision based on factors, external or internal which are relevant to the driving situation, before launching any application or displaying anything on screen. This offers a safety measure in a vehicle environment when it is in motion.

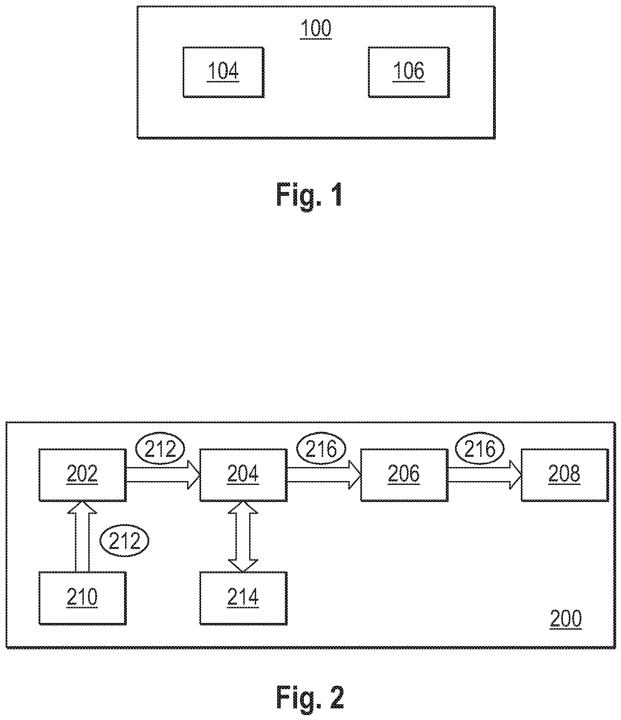

FIG. 1 discloses a system 100 according to one of many embodiments of the present invention. According to FIG. 1, the system 100 comprises a processing module 104 and a user interface operation module 106. The processing module 104 receives the vehicle state input data and processes the vehicle state input data to select a user interface operation version from a plurality of different interface operation versions based on the vehicle state input data. The user interface operation module 106 operates the user interface according to the selected user interface operation version.

FIG. 2 shows yet another example system 200 in accordance with one of a number of embodiments. According to FIG. 2, the system 200 comprises a vehicle state observer module 202. This module 202 is connected to a sensor 210. The sensor 210 retrieves information related to vehicle state in the form of vehicle state input data 212, for example, the speed of the vehicle. The sensor then transmits this vehicle state input data 212 to the vehicle state observer module 202. The system 200 may comprise one or more such sensors 210 which may be internal or external to the vehicle. According to an embodiment the sensor may even retrieve information from sources not connected with the vehicle, for example, information about the traffic condition in the approaching city. Next the vehicle state observer module 202 receives the vehicle state input data 212 from the sensor 210. The system 200 as shown in FIG. 2 further comprises a processing module 204 which is connected to the vehicle state observer module 202. Through this connection the application decision module 204 receives the vehicle state input data 212. The processing module 204 is connected to a database 214. This database 214 contains a list of rules wherein each vehicle state input data has a corresponding rule associated with it. According to another embodiment a combination of one or more vehicle state input data 212 has a corresponding combination of one or more rules associated to it. The rule identifies which user interface operation version is appropriate for the given vehicle state input data.

On receiving the vehicle state input data 212 from the vehicle state observer module 202, the processing module 204 refers to the database 214 to check which rule corresponds to the received vehicle state input data 212. On determining the correct rule the processing module 204 selects the corresponding appropriate user interface operation version 216 to be rendered to the user. Therefore, the decision as to which user interface application version 216 is to be rendered to the user is processed and made by the processing module 204.

The system 200 further constitutes a user interface operation module 206. This module 206 is connected to the processing module 204. Once the decision about which user interface operation version 216 is to be rendered has been made, the processing module 204 passes over the information of the selected user interface operation version 216 to the user interface operation module 206. The user interface operation module 206 is connected to a display 208 for displaying one or more applications and/or different application versions, corresponding to the user interface operation version 216, for use by the user/driver of the car.

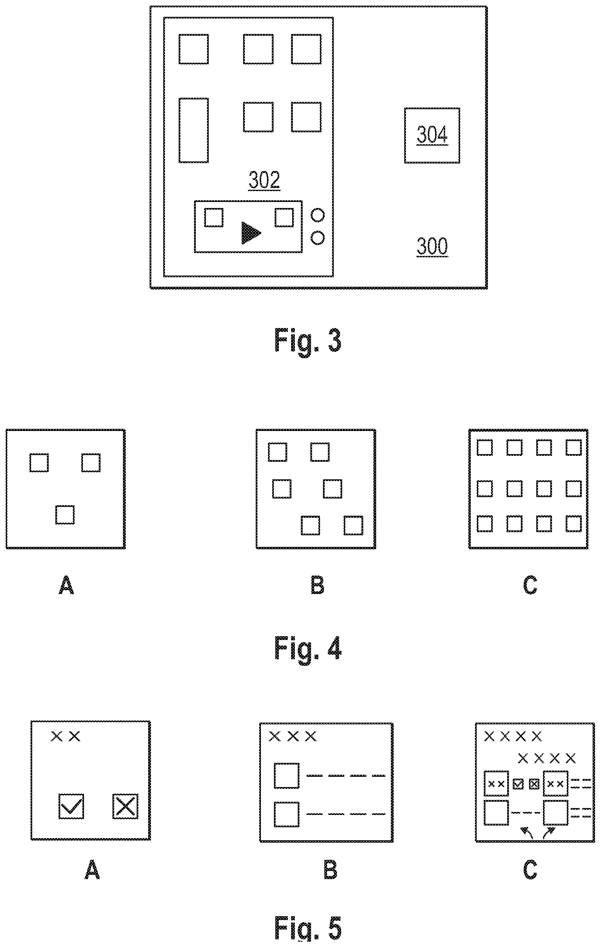

Now referring to FIG. 3, it depicts an example of an infotainment device 300 of a vehicle in accordance with one of a number of embodiments. The infotainment device 300 or the in-car-entertainment device comprises a display 302. It further constitutes a memory unit 304. The infotainment device 300 may comprise of several other devices or units as are well known in the art and is not limited to the device 300 as shown in FIG. 3. For example, the infotainment device 300 may further comprise of speakers, keypad, other input-output devices, jacks, a further display screen, controller or logic unit etc.

Referring now to FIG. 4A-C, they schematically show different example versions of the user interface in accordance with one of a number of embodiments. Only three examples are shown for illustrative purposes, it is understood that many more similar versions of the user interface may be possible. Depending on the user interface operation version selected by the application decision module based on the retrieved vehicle state input data, the application framework renders the selected user interface operation version for display. According to FIG. 4A, when the vehicle state input data reflects a value, for example, speed of the vehicle, above a certain threshold value/speed, the application decision module selects a user interface operation version 416a which comprises a user interface containing only those bare minimum applications that are most urgent and need to be available to the user while driving the vehicle, such as a navigation application. The other, less urgent applications, for example, applications related to social networking sites, may be hidden from the user interface. Therefore, only those applications will be displayed on the home screen of the infotainment device that are deemed safe by the system under the current vehicle state input data.

According to FIG. 4B, when the vehicle state input data reflects a value, for example, speed of the vehicle, as below or equal to a certain threshold value/speed, the application decision module selects a user interface operation version 416b which comprises a user interface containing not only those applications that are needed urgently by the driver, but also certain other additional applications which do not distract the driver from his driving. For example, music applications offering a choice of music to play, call receive/calling function related applications etc.

In a third example, as shown in FIG. 4C, when the vehicle state input data reflects a value, for example, speed of the vehicle, as zero or the vehicle is stationary, the application decision module selects a user interface operation version 416c which comprises a user interface containing all the applications that are supported by the infotainment device.

FIG. 5A-5C schematically show different exemplary versions of an application available to the user interface in accordance with one of a number of embodiments. Only three examples are shown for illustrative purposes, it is understood that many more similar application versions may be possible. Depending on the user interface operation version selected by the application decision module based on the retrieved vehicle state input data, the application framework renders the selected user interface operation version for display.

According to FIG. 5A, as an example, when the vehicle state input data reflects a value, for example, speed of the vehicle, above a certain threshold value/speed, the application decision module selects a user interface operation version 516a which comprises a light version of the user application that the user wishes to use. As seen in FIG. 5A the light version of the application version displays very minimal features in the form of a basic version of the application with lowest level of UI complexity. This means that the driver does not have to distract himself from the main task of driving the car and with minimalistic driver involvement the application can run smoothly. In other words, the user interface corresponding to the application is simplified in this light version.

According to FIG. 5B, as a second example, when the vehicle state input data reflects a value, for example, speed of the vehicle, below or equal to a certain threshold value/speed, the application decision module selects a user interface operation version 516b which comprises a medium version of the user application that the user wishes to use. As seen in FIG. 5B the medium version of the application version displays very still reduced user interface complexity with less features as compared to the usual application complexity. This means that the driver does not have to distract himself from the main task of driving the car but can also run the application with some features that were not available during the light version of the application.

According to FIG. 5C, as yet another example, when the vehicle state input data reflects a value, for example, speed of the vehicle, as zero or the vehicle being stationary, the application decision module selects a user interface operation version 516c which comprises a high version of the user application that the user wishes to use. As seen in FIG. 5C the high version of the application version displays all the features in the form of full version of the application with full-fledged or highest level of UI complexity. No features of the application are simplified, compressed or minimized for display.

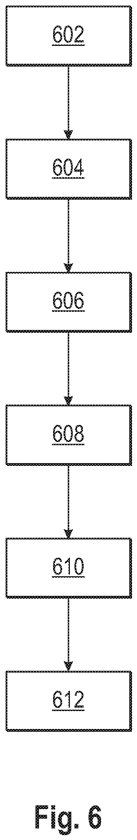

FIG. 6 is a flow chart for an example method 600 in accordance with one of a number of embodiments. The method 600 comprises a first step 602 of request for launching of an application by a user who is the driver of the vehicle. On receiving the launch request, the method 600 follows a step 604 of fetching or retrieving vehicle state input data which relates to the current state of the vehicle. In the next step 606, the method 600 comprises processing of the fetched vehicle input data. Now this step of processing 606 involves selecting a user interface operation version based on the vehicle state input data fetched.

The processing step 606 may involve comparing the vehicle state input data to a threshold value, finding a rule for selecting a user interface operation version given the vehicle state input data or identifying a user interface operation version based on a past event training log. The disclosed system may store user inputs, which he/she takes frequently while driving, and use such inputs under the similar conditions instead of asking user or seeking user intervention. Such a user input corresponding to an event is stored for later retrieval in the past event training log. An event of incoming call has a corresponding operation of cancelling of the incoming phone call while driving. An event of a pop up coming up on the display screen has a corresponding operation of dismissing of such pop-ups etc. This will allow the user to have lesser distractions while driving.

The next step 610 of the method 600 involves displaying the selected user interface operation version on a display screen of the vehicle infotainment device. This user interface operation version can be one or a combination of different operations based on a past event training log, different versions of the user interface associated with different applications and/or different versions of the application comprising one of a light version, a medium version or a high version.

The method 600 further comprises a step 612 of tracking a change in the vehicle state input data. As long as there is no change in the vehicle state input data, the same selected user interface operation version can be available to the user for use on the display unit of the infotainment device. However, when there is a change detected to vehicle state input data, for example, the vehicle has come to a stop from a speed of 60 km/h, the step 606 of processing of the vehicle state input data is repeated to select a new user interface operation version based on the changed vehicle state input data.

The description of embodiments has been presented for purposes of illustration and description. Suitable modifications and variations to the embodiments may be performed in light of the above without departing from the scope of protection as determined by the claims.

In particular, whilst some of the above examples are described in connection with speed of the vehicle, the embodiments disclosed herein may also be implemented with other vehicle state input data as disclosed in the claims.

## Claims

1. A method for operating a user interface of a vehicle infotainment device, the user interface operable to present one or more applications, the method comprising:
storing an input in a past event training log, the input corresponding to one of events of incoming calls being canceled frequently by the driver or events of pop-ups coming up on a display and dismissing the pop-ups by the driver while the vehicle is being driven;
retrieving (604) vehicle state input data relating to the current state of the vehicle;
processing (606) the vehicle state input data to select one of a plurality of different user interface operation versions based on the vehicle state input data;
rendering the user interface according to the selected user interface operation version on a display screen of the vehicle infotainment device,
wherein each of the plurality of different user interface operation versions comprises a respective set of operations based on the past event training log, wherein the past event training log comprises a log of a user's interaction with the user interface of the vehicle infotainment device corresponding to one or more events requiring an input from the driver, and
wherein the event comprises at least one of an incoming call, incoming message, information alert, or any other event requiring an input or a response from the driver; and
applying the input from the past event training log instead of asking or seeking user interaction when the one or more events occur.

2. The method according to claim 1, wherein each of the plurality of different user interface operation version comprises:
a respective set of different applications.

3. The method according to claim 1 or 2, comprising at least one application for operation in each of the different user interface versions, wherein the application is operable in different application versions, wherein each of the application versions is associated with a respective one of the different user interface operation versions.

4. The method according to claim 3, wherein the application comprises a plurality of functions, wherein a reduced set of the plurality of functions is available for operation in at least one the application versions.

5. The method according to claim 3 or 4, wherein each version of the application is associated with a respective version of representation of the application and/or functions thereof to a user via the user interface.

6. The method according to any of the preceding claims, wherein the applications comprise one or more of network and connectivity application, communication application, navigation application, video player application, messaging application, multimedia application, social media application or news and information application.

7. The method according to any of the preceding claims, wherein operating different versions of the user interface associated with different applications comprises rendering all or a subset of applications to the user interface based on the vehicle state input data.

8. The method according to any of the preceding claims, further comprising:
monitoring the vehicle state input data for a change;
processing the changed vehicle state input data to select a user interface operation version based on the changed vehicle state input data;
operating the user interface by transitioning to the selected user interface operation version.

9. The method according to claim 1, wherein the vehicle state input data comprises at least one of inside temperature of the vehicle, engine temperature, or sensor information that provides a traffic condition for an approaching city.

10. A system (100, 200) for operating a user interface of a vehicle infotainment device, the user interface operable to present one or more applications, the system comprising:
a processing module (104, 204) to receive vehicle state input data relating to the current state of the vehicle and process the vehicle state input data to select a user interface operation version based on the vehicle state input data; and
a user interface operation module (106, 206) to render the user interface according to the selected user interface operation version on a display screen of the vehicle infotainment device,
wherein the selected user interface operation version comprises a set of operations based on a past event training log,
wherein the past event training log comprises a log of a user's interaction with the user interface of the vehicle infotainment device corresponding to one or more events requiring an input from the driver, and
wherein the event comprises at least one of an incoming call, incoming message, information alert, or any other event requiring an input or a response from the driver;
wherein the input is stored the past event training log, the input corresponding to one of events of incoming calls being canceled frequently by the driver or events of pop-ups coming up on a display and dismissing the pop-ups by the driver while the vehicle is being driven; and
wherein the system is configured to apply the input instead of asking or seeking user interaction when the one or more events occur.

11. The system (100, 200) according to claim 10, wherein the user interface comprises a display for displaying one or more applications and/or different application versions corresponding to the user interface operation version.

12. The system (100, 200) according to claim 10 or 11, wherein the processing module is operable to receive the vehicle state input data from one or more sensors, wherein the sensors are integrated in the vehicle and/or the sensors are external to the vehicle.

13. The system (100, 200) according to any of the claims 10-12, wherein the processing module is operable to access a database comprising rules to select a user interface operation version corresponding to a vehicle state input data value.

14. A computer-program product having a non-transitory computer readable medium storing computer executable code which, when executed by computer, causes the method of any of claims 1-9 to be performed.

## Patentansprüche

1. Verfahren zum Betreiben einer Benutzeroberfläche einer Fahrzeug-Infotainmentvorrichtung, wobei die Benutzeroberfläche dazu betriebsfähig ist, eine oder mehrere Anwendungen zu präsentieren, wobei das Verfahren Folgendes umfasst:
Speichern einer Eingabe in einem Trainingsprotokoll für vergangene Ereignisse, wobei die Eingabe einem von Ereignissen eingehender Anrufe, die häufig durch den Fahrer gelöscht werden, oder Ereignisse von Pop-ups, die auf einer Anzeige erscheinen, entspricht, und Ausblenden der Pop-ups durch den Fahrer, während das Fahrzeug gefahren wird;
Abrufen (604) von Fahrzeugzustandseingabedaten, die sich auf den aktuellen Zustand des Fahrzeugs beziehen;
Verarbeiten (606) der Fahrzeugzustandseingabedaten, um basierend auf den Fahrzeugzustandseingabedaten eine von einer Vielzahl unterschiedlicher Benutzeroberflächenbetriebsversionen auszuwählen;
Rendern der Benutzeroberfläche gemäß der ausgewählten Benutzeroberflächenbetriebsversion auf einem Bildschirm der Fahrzeug-Infotainmentvorrichtung,
wobei jede der Vielzahl unterschiedlicher Benutzeroberflächenbetriebsversionen einen jeweiligen Satz von Operationen basierend auf dem Trainingsprotokoll für vergangene Ereignisse umfasst, wobei das Trainingsprotokoll für vergangene Ereignisse ein Protokoll der Interaktion eines Benutzers mit der Benutzeroberfläche der Fahrzeug-Infotainmentvorrichtung umfasst, die einem oder mehreren Ereignissen entspricht, die eine Eingabe vom Fahrer erfordern, und
wobei das Ereignis mindestens eines von einem eingehenden Anruf, einer eingehenden Nachricht, eine Informationswarnung oder ein anderes Ereignis umfasst, das eine Eingabe oder eine Antwort von dem Fahrer erfordert; und
Anwenden der Eingabe aus dem Trainingsprotokoll für vergangene Ereignisse, statt eine Benutzerinteraktion anzufragen oder anzufordern, wenn das eine oder die mehreren Ereignisse eintreten.

2. Verfahren nach Anspruch 1, wobei jede der Vielzahl unterschiedlicher Benutzeroberflächenbetriebsversionen umfasst:
jeweils einen Satz unterschiedlicher Anwendungen.

3. Verfahren nach Anspruch 1 oder 2, umfassend mindestens eine Anwendung zum Betrieb in jeder der unterschiedlichen Benutzeroberflächenversionen, wobei die Anwendung in unterschiedlichen Anwendungsversionen betriebsfähig ist, wobei jede der Anwendungsversionen einer jeweiligen einen der unterschiedlichen Benutzeroberflächenbetriebsversionen zugeordnet ist.

4. Verfahren nach Anspruch 3, wobei die Anwendung eine Vielzahl von Funktionen umfasst, wobei ein reduzierter Satz der Vielzahl von Funktionen für den Betrieb in mindestens einer der Anwendungsversionen verfügbar ist.

5. Verfahren nach Anspruch 3 oder 4, wobei jede Version der Anwendung eine jeweilige Version der Darstellung der Anwendung und/oder Funktionen davon für einen Benutzer über die Benutzeroberfläche zugeordnet ist.

6. Verfahren nach einem der vorhergehenden Ansprüche, wobei die Anwendungen eine oder mehrere von einer Netzwerk- und Konnektivitätsanwendung, einer Kommunikationsanwendung, einer Navigationsanwendung, einer Videoplayer-Anwendung, einer Messaging-Anwendung, einer Multimedia-Anwendung, einer Social-Media-Anwendung oder einer Nachrichten- und Informationsanwendung umfassen.

7. Verfahren nach einem der vorhergehenden Ansprüche, wobei das Betreiben unterschiedlicher Versionen der Benutzeroberfläche, die unterschiedlichen Anwendungen zugeordnet sind, umfasst, dass alle oder eine Teilmenge von Anwendungen basierend auf den Fahrzeugzustandseingabedaten an die Benutzeroberfläche gerendert werden.

8. Verfahren nach einem der vorhergehenden Ansprüche, ferner umfassend:
Überwachen der Fahrzeugzustandseingabedaten auf eine Änderung;
Verarbeiten der geänderten Fahrzeugzustandseingabedaten, um basierend auf den geänderten Fahrzeugzustandseingabedaten eine Benutzeroberflächenbetriebsversion auszuwählen;
Betreiben der Benutzeroberfläche durch Übergehen auf die ausgewählte Benutzeroberflächenbedienungsversion.

9. Verfahren nach Anspruch 1, wobei die Fahrzeugzustandseingabedaten zumindest eines von Fahrzeuginnentemperatur, Motortemperatur oder Sensorinformationen umfassen, die einen Verkehrszustand für eine sich nähernde Stadt bereitstellen.

10. System (100, 200) zum Betreiben einer Benutzeroberfläche einer Fahrzeug-Infotainmentvorrichtung, wobei die Benutzeroberfläche dazu betriebsfähig ist, eine oder mehrere Anwendungen zu präsentieren, wobei das System Folgendes umfasst:
ein Verarbeitungsmodul (104, 204) zum Empfangen von Fahrzeugzustandseingabedaten, die sich auf den aktuellen Zustand des Fahrzeugs beziehen, und Verarbeiten der Fahrzeugzustandseingabedaten, um eine Benutzeroberflächenbetriebsversion basierend auf den Fahrzeugzustandseingabedaten auszuwählen; und
ein Benutzeroberflächenbedienmodul (106, 206) zum Rendern der Benutzeroberfläche gemäß der ausgewählten Benutzeroberflächenbetriebsversion auf einem Bildschirm der Fahrzeug-Infotainmentvorrichtung,
wobei die ausgewählte Benutzeroberflächenbetriebsversion einen Satz von Operationen umfasst, der auf einem Trainingsprotokoll für vergangene Ereignisse basiert,
wobei das Trainingsprotokoll für vergangene Ereignisse ein Protokoll der Interaktion eines Benutzers mit der Benutzeroberfläche der Fahrzeug-Infotainmentvorrichtung umfasst, die einem oder mehreren Ereignissen entspricht, die eine Eingabe vom Fahrer erfordern, und
wobei das Ereignis mindestens einen von einem eingehenden Anruf, einer eingehenden Nachricht, eine Informationswarnung oder ein anderes Ereignis umfasst, das eine Eingabe oder eine Antwort von dem Fahrer erfordert;
wobei die Eingabe in dem Trainingsprotokoll für vergangene Ereignisse gespeichert wird, wobei die Eingabe einem von Ereignissen eingehender Anrufe, die häufig durch den Fahrer gelöscht werden, oder Ereignisse von Pop-ups, die auf einer Anzeige erscheinen, entspricht, und Ausblenden der Pop-ups durch den Fahrer, während das Fahrzeug gefahren wird; und
wobei das System dazu konfiguriert ist, die Eingabe anzuwenden, statt eine Benutzerinteraktion anzufragen oder anzufordern, wenn das eine oder die mehreren Ereignisse eintreten.

11. System (100, 200) nach Anspruch 10, wobei die Benutzeroberfläche eine Anzeige zum Anzeigen einer oder mehrerer Anwendungen und/oder unterschiedlicher Anwendungsversionen, die der Benutzeroberflächenbetriebsversion entsprechen, umfasst.

12. System (100, 200) nach Anspruch 10 oder 11, wobei das Verarbeitungsmodul dazu betriebsfähig ist, die Fahrzeugzustandseingabedaten von einem oder mehreren Sensoren zu empfangen, wobei die Sensoren im Fahrzeug integriert sind und/oder sich die Sensoren außerhalb des Fahrzeugs befinden.

13. System (100, 200) nach einem der Ansprüche 10-12, wobei das Verarbeitungsmodul dazu betriebsfähig ist, auf eine Datenbank zuzugreifen, die Regeln umfasst, um eine Benutzeroberflächenbetriebsversion auszuwählen, die einem Fahrzeugzustandseingabedatenwert entspricht.

14. Computerprogrammprodukt mit einem nicht transitorischen computerlesbaren Medium, das computerausführbaren Code speichert, der bei Ausführung durch den Computer bewirkt, dass das Verfahren nach einem der Ansprüche 1 bis 9 durchgeführt wird.

## Revendications

1. Procédé d'exploitation d'une interface utilisateur d'un dispositif d'infodivertissement de véhicule, l'interface utilisateur pouvant être utilisée pour présenter une ou plusieurs applications, le procédé comprenant :
la mémorisation d'une entrée dans un journal d'apprentissage d'événements passés, l'entrée correspondant à l'un des événements d'appels entrants annulés fréquemment par le conducteur ou des événements de fenêtres publicitaires apparaissant sur un écran d'affichage et de rejet des fenêtres publicitaires par le conducteur, pendant que le véhicule est conduit ;
la récupération (604) de données d'entrée d'état de véhicule relatives à l'état actuel du véhicule ;
le traitement (606) de données d'entrée d'état de véhicule pour sélectionner une version parmi une pluralité de versions d'exploitation d'interface utilisateur différentes en fonction des données d'entrée d'état de véhicule ;
le rendu de l'interface utilisateur selon la version d'exploitation d'interface utilisateur sélectionnée sur un écran d'affichage du dispositif d'infodivertissement de véhicule,
dans lequel chacune de la pluralité de différentes versions d'exploitation d'interface utilisateur comprend un ensemble respectif d'exploitations basé sur le journal d'apprentissage d'événements passés, dans lequel le journal d'apprentissage d'événements passés comprend un journal de l'interaction d'un utilisateur avec l'interface utilisateur du dispositif d'infodivertissement de véhicule correspondant à un ou plusieurs événements nécessitant une entrée du conducteur, et
dans lequel l'événement comprend au moins l'un d'un appel entrant, d'un message entrant, d'une alerte d'information ou de tout autre événement nécessitant une entrée ou une réponse du conducteur ; et
l'application de l'entrée provenant du journal d'apprentissage d'événements passés au lieu de demander ou de rechercher une interaction utilisateur lorsque l'un ou les plusieurs événements se produisent.

2. Procédé selon la revendication 1, dans lequel chacune de la pluralité de versions différentes d'exploitation d'interface utilisateur comprend :
un ensemble respectif d'applications différentes.

3. Procédé selon la revendication 1 ou 2, comprenant au moins une application pour l'exploitation dans chacune des différentes versions de l'interface utilisateur, dans lequel l'application peut être utilisée dans différentes versions de l'application, dans lequel chacune des versions de l'application est associée à une version respective des différentes versions d'exploitation de l'interface utilisateur.

4. Procédé selon la revendication 3, dans lequel l'application comporte une pluralité de fonctions, dans lequel un ensemble réduit de la pluralité de fonctions est disponible pour une exploitation dans au moins une des versions de l'application.

5. Procédé selon la revendication 3 ou 4, dans lequel chaque version de l'application est associée à une version respective de représentation de l'application et/ou de ses fonctions auprès d'un utilisateur par l'intermédiaire de l'interface utilisateur.

6. Procédé selon l'une quelconque des revendications précédentes, dans lequel les applications comprennent l'une ou plusieurs d'une application réseau et connectivité, d'une application de communication, d'une application de navigation, d'une application de lecteur vidéo, d'une application de messagerie, d'une application multimédia, d'une application de média social ou d'une application d'actualités et d'informations.

7. Procédé selon l'une quelconque des revendications précédentes, dans lequel l'exploitation de différentes versions de l'interface utilisateur associées à différentes applications comprend le rendu de toutes les applications ou d'un sous-ensemble d'applications à l'interface utilisateur en fonction des données d'entrée d'état de véhicule.

8. Procédé selon l'une quelconque des revendications précédentes, comprenant en outre :
la surveillance des données d'entrée d'état de véhicule pour une modification ;
le traitement des données d'entrée d'état de véhicule modifiées pour sélectionner une version d'exploitation d'interface utilisateur en fonction des données d'entrée d'état de véhicule modifiées ;
l'exploitation de l'interface utilisateur en passant à la version d'exploitation d'interface utilisateur sélectionnée.

9. Procédé selon la revendication 1, dans lequel les données d'entrée d'état de véhicule comprennent au moins un parmi une température interne du véhicule, une température du moteur ou des informations de capteur qui fournit une condition de circulation pour une ville se rapprochant.

10. Système (100, 200) d'exploitation d'une interface utilisateur d'un dispositif d'infodivertissement de véhicule, l'interface utilisateur pouvant être utilisée pour présenter une ou plusieurs applications, le système comprenant :
un module de traitement (104, 204) pour recevoir des données d'entrée d'état de véhicule relatives à l'état actuel du véhicule et traiter les données d'entrée d'état de véhicule pour sélectionner une version de fonctionnement d'interface utilisateur en fonction des données d'entrée d'état de véhicule ; et
un module d'exploitation d'interface utilisateur (106, 206) pour rendre l'interface utilisateur selon la version d'exploitation d'interface utilisateur sélectionnée sur un écran d'affichage du dispositif d'infodivertissement de véhicule,
dans lequel la version d'exploitation d'interface utilisateur sélectionnée comprend un ensemble d'exploitations basé sur un journal d'apprentissage d'événements passés,
dans lequel le journal d'apprentissage d'événements passés comprend un journal d'interaction d'un utilisateur avec l'interface utilisateur du dispositif d'infodivertissement de véhicule correspondant à un ou plusieurs événements nécessitant une entrée du conducteur, et
dans lequel l'événement comprend au moins l'un d'un appel entrant, d'un message entrant, d'une alerte d'information ou de tout autre événement nécessitant une entrée ou une réponse du conducteur ; et
dans lequel l'entrée est mémorisée dans le journal d'apprentissage d'évènements passés, l'entrée correspondant à l'un des événements d'appels entrants annulés fréquemment par le conducteur ou des événements de fenêtres publicitaires apparaissant sur un afficheur et de rejet des fenêtres publicitaires par le conducteur, pendant que le véhicule est conduit ; et
dans lequel le système est configuré pour appliquer l'entrée au lieu de demander ou de rechercher une interaction utilisateur lorsque l'un ou les plusieurs événements se produisent.

11. Système (100, 200) selon la revendication 10, dans lequel l'interface utilisateur comprend un écran d'affichage pour afficher une ou plusieurs applications et/ou différentes versions d'applications correspondant à la version d'exploitation de l'interface utilisateur.

12. Système (100, 200) selon la revendication 10 ou 11, dans lequel le module de traitement peut être utilisé pour recevoir les données d'entrée d'état de véhicule en provenance d'un ou plusieurs capteurs, dans lequel les capteurs sont intégrés dans le véhicule et/ou les capteurs sont externes au véhicule.

13. Système (100, 200) selon l'une quelconque des revendications 10 à 12, dans lequel le module de traitement peut être utilisé pour accéder à une base de données comprenant des règles pour sélectionner une version d'exploitation d'interface utilisateur correspondant à une valeur de données d'entrée d'état de véhicule.

14. Produit programme d'ordinateur ayant un support lisible par ordinateur non transitoire mémorisant un code exécutable par ordinateur qui, lorsqu'il est exécuté par ordinateur, entraîne la mise en œuvre du procédé selon l'une quelconque des revendications 1 à 9.
